**Europäisches Patentamt**

**European Patent Office**

**Office européen des brevets**

(19)

(11) Veröffentlichungsnummer : **0 452 867 B1**

(12) # EUROPÄISCHE PATENTSCHRIFT

(45) Veröffentlichungstag der Patentschrift :
29.06.94 Patentblatt 94/26

(51) Int. Cl.⁵ : **F26B 3/30, F26B 13/20**

(21) Anmeldenummer : **91106026.7**

(22) Anmeldetag : **15.04.91**

(54) **Verfahren und Vorrichtung zur Wärmebehandlung einer mit einer flüssigen oder pastenförmigen Zubereitung versehenen Warenbahn.**

(30) Priorität : **18.04.90 CH 1314/90**

(43) Veröffentlichungstag der Anmeldung :
**23.10.91 Patentblatt 91/43**

(45) Bekanntmachung des Hinweises auf die Patenterteilung :
**29.06.94 Patentblatt 94/26**

(84) Benannte Vertragsstaaten :
**AT BE CH DE DK ES FR GB GR IT LI LU NL SE**

(56) Entgegenhaltungen :
**EP-A- 0 157 403
EP-A- 0 346 081
WO-A-89/04890
DE-A- 2 502 367**

(56) Entgegenhaltungen :
**DE-A- 3 209 475
DE-A- 3 834 058
FR-A- 2 630 532
US-A- 2 532 032**

(73) Patentinhaber : **VAN BRANDWIJK SYSTEMS PROGRAMMING B.V.
Burg. Patijnlaan 262
NL-2585 BR Den Haag (NL)**

(72) Erfinder : **Baldinger, Hansjörg
Am Schützenweg 7
CH-5702 Niederlenz (CH)**

(74) Vertreter : **Patentanwälte Schaad, Balass & Partner
Dufourstrasse 101
Postfach
CH-8034 Zürich (CH)**

## Beschreibung

Die Erfindung betrifft ein Verfahren zur Wärmebehandlung einer mit einer flüssigen oder pastenförmigen Zubereitung versehenen Warenbahn und eine Vorrichtung zur Durchführung eines derartigen Verfahrens nach dem Oberbegriff von Anspruch 1 bzw. Anspruch 11.

Ein derartiges Verfahren und eine derartige Vorrichtung sind aus der GB-PS 12 34 956 bekannt. Bei dem vorbekannten Verfahren wird eine mit einer flüssigen Zubereitung versehene Warenbahn in einer Behandlungskammer mittels Wärmestrahlung und Warmluft behandelt. Die Behandlungskammer ist vertikal angeordnet. Die Warenbahn läuft in der Form eines umgekehrten U durch die Behandlungskammer hindurch. Die Behandlungsluft wird im Gegenstrom zur Warenbahn geführt. Sie wird seitlich eingeblasen. In der Behandlungskammer ist auf jeweils beiden Seiten der Warenbahn eine Vielzahl von Heizrohren angebracht, die von heißem Dampf durchströmt werden.

Aus der DD-PS 212 574 ist ein Verfahren zur Trocknung und Vernetzung von auf Flächengebilden aufgebrachten Polymeren bekannt, das insbesondere zur Trocknung und Teilvernetzung von mit Polymerbindemitteln getränkten Trägermaterialien zur Prepregherstellung dient. Der Trockner wird von einem Luftstrom durchströmt. Um die zugeführte Wärmeenergie weitgehend nur zur Lösungsmittelverdampfung und zur weiteren Aufheizung der Prepregbahn zu nutzen und hierdurch wesentliche Energie- einsparungen zu erreichen, wird der in den Trockner an einem Eintrittsschlitz eintretende Luftstrom in einen Hauptluft- strom und in einen wesentlich geringeren Luftstrom geteilt. Der Hauptluftstrom ist unbeheizt und wird durch einen äußeren Trocknerraum geführt. Der andere, wesentlich geringere Luftstrom tritt in einen inneren Trocknerraum ein und wird durch Heizplatten aufgeheizt. Die Heizplatten dienen also dazu, den Luftstrom aufzuheizen.

Aus der WO-A-8904 890 ist ein Verfahren bzw. eine Vorrichtung zum Trocknen von Papierbahnen bekannt. Die Vorrichtung weist zwei individuelle nacheinander angeordnete Behandlungskammern auf, wobei die erste Kammer als Infrarottrockner und die zweite Kammer als Schwebetrockner ausgebildet ist.

Aus der DE-A-32 09 475 ist ein Verfahren und eine Vorrichtung zum Konditionieren von Papier und zum Trocknen von derartigen Produkten bekannt. Dabei wird die zu behandelnde Warenbahn mit einer reinen Heissdampfatmosphäre beaufschlagt. Der Heissdampfbehandlung kann eine Vorwärmzone vorgeschaltet sein.

Die DE-A-25 02 367 beschreibt eine Trockenanlage für Stoffe. Der zu trocknende Stoff wird durch eine Vielzahl von Kammern transportiert, wobei er an seinen Rändern von Klemmen gehalten wird. Jede der Kammern weist drei Zonen auf. In der ersten Zone wird Luft auf den Stoff geleitet. In der zweiten Zone wird der Stoff und die eingeleitete Luft mittels Heizplatten erwärmt. In der dritten Zone wird die Luft umgewälzt.

Aufgabe der Erfindung ist es, ein Verfahren bzw. eine Vorrichtung vorzuschlagen, mit denen eine bessere Qualität erreicht werden kann.

Erfindungsgemäß wird diese Aufgabe durch die kennzeichnenden Merkmale von Anspruch 1 bzw. Anspruch 11 gelöst. Besonders bevorzugte Ausführungsformen der Erfindung sind Gegenstand der Ansprüche 2 bis 10 und 12 bis 20.

Das erfindungsgemäße Verfahren ist insbesondere zur Herstellung von Prepregs geeignet. Bei einem Prepreg handelt es sich um ein mit einem härtbaren Harz versehenes Flächengebilde, auf dem das in Form einer Lösung oder Dispersion aufgebrachte Kunstharz bis zu einem bestimmten Grad durch eine chemische Reaktion ausgehärtet ist. Die verwendungstechnischen Eigenschaften eines Prepregs werden durch den Härtungszustand bestimmt, so daß die Härtungsreaktion sehr sorgfältig und genau zum gewünschten Härtungsgrad geführt werden muß. Insbesondere ist eine konstante Qualität und damit ein konstanter Härtungsgrad über das ganze Flächengebilde erwünscht.

Das erfindungsgemäße Verfahren und die erfindungsgemäße Vorrichtung sind allerdings auch zur Wärmebehandlung anderer Warenbahnen einsetzbar. Es kann sich um einseitig oder beidseitig beschichtete Warenbahnen handeln. Als Warenbahnen kommen beispielsweise Vliese, Gewebe, Metallbahnen wie Stahl und Aluminium, hochtemperaturbeständige Kunststoffolien in Frage. Bei den auf der Warenbahn aufgebrachten Materialien kann es sich um Acrylpolymere, Polyvinylchlorid, Polyurethan, Melaminharze, Epoxyharze etc. handeln. Das Produkt kann dann eine lackierte oder bedruckte Metallbahn oder Kunststoffolie, ein Dekormaterial, Bodenbelag, Kunstleder oder veredeltes Papier sein.

Prepregs auf Papierbasis werden gemäß dem Stand der Technik in sogenannten Schwebetrocknern hergestellt. Es handelt sich dabei um horizontale Behandlungskammern, in denen die imprägnierte Papierbahn mittels warmer Luft angeblasen und schwebend durch die Behandlungskammer geführt wird. Das Schweben kann nach dem Tragflügel- oder nach dem Luftkissenprinzip erzielt werden. Beide Prinzipien nützen die bei der hohen Luftgeschwindigkeit auftretenden Turbulenzen aus. Dabei wird die Warenbahn mittels Luftdüsenanordnungen von oben und von unten mit Luft beaufschlagt, was eine ruhige Führung in schwebender Lage auch bei hohen Warenbahngeschwindigkeiten erlaubt. Wesentlich ist, daß die Warenbahn nicht flattert und nicht an den Düsen anschlägt. Die eingeführte Luft dient neben dem schwebenden Transport auch zum Trocknen, d.h. Herausblasen von flüchtigen Bestandteilen, z.B. des Lösungsmittels oder Wassers, Verdünnen und Wegführen dieser Stoffe und zur Beaufschlagung der Warenbahn mit Wärme, d.h. Herbeiführung der Härtungsreaktion.

Allerdings vermögen die derart hergestellten Prepregs den immer steigenden Anforderungen der modernen Elektronikindustrie nicht mehr zu genügen. Insbesondere wird die Ungleichmäßigkeit der Aushärtung über die Fläche beanstandet.

Eine gleichmäßige Temperatur im Luftstrom läßt sich zwar über die Breite der Behandlungskammer erzielen, unabhängig davon ob die Düsen einseitig, beidseitig oder von der Mitte her gespeist werden. Da aber der Aushärtungsgrad nicht nur von der Temperatur allein, sondern auch von der Luftgeschwindigkeit, mit der die Wärme auf die Warenbahn aufgebracht wird, abhängig ist, ist das Hauptproblem die Erzeugung einer gleichmäßigen Ausblasgeschwindigkeit. Dies ist bei Luftgeschwindigkeiten von 8 bis 40 m/sec., insbesondere bei breiten Anlagen, nicht ausreichend beherrschbar. Wenn beispielsweise bei einer Warenbreite von 3 m die Luftgeschwindigkeit um +/-3 % variiert, ist die daraus resultierende Variation im Aushärtungsgrad des Prepregs nicht mehr akzeptabel. Entsprechend sind die bekannten Schwebetrockner in ihrem Einsatz stark begrenzt.

Die Wärmebehandlung der Warenbahn kann dazu dienen, die Warenbahn zu trocknen. Sie kann allerdings auch dazu dienen, die Warenbahn zu trocknen und auszuhärten. Sie kann weiterhin dazu dienen, das Harz, z.B. bei Schmelzharzauftrag, lediglich auszuhärten. Unter einem "Aushärten" versteht man eine chemische Reaktion, also beispielsweise eine Vorpolymerisation (bei Epoxidharzen) oder eine Vorpolykondensation (bei Phenolharzen). Es kann auch ein vollständiges Aushärten stattfinden, beispielsweise bei Acrylharzen.

Die Erfindung ist sowohl zur Herstellung von Fertigprodukten geeignet als auch zur Herstellung von Halbzeugen.

Mit der Erfindung wird der Vorteil erreicht, daß bei der vorzugsweise horizontalen, aber auch bei der vertikalen Führung der Warenbahn mittels Luftanblasen eine qualitativ einwandfreie, insbesondere bezüglich des sogenannten Flußprofils für die Elektronikindustrie genügend gleichmäßige, Härtung der Warenbahn, insbesondere des Prepregs, erfolgt.

Die Messung des Flußprofils stellt ein allgemein bekanntes Verfahren zur Messung des Härtungsgrades dar. Unter gleichmäßigem Flußprofil wird hier bei einer 15 %-igen Aushärtung eine Toleranz von +/-1 %, also eine Aushärtung von 14 bis 16 %, verstanden.

Überraschenderweise wurde gefunden, daß durch eine Verungleichmäßigung, insbesondere durch eine starke Verungleichmäßigung der Beaufschlagung der Warenbahn mit Luft, nämlich durch Unterbrechung der Luftzuführung, über vorzugsweise weite Strecken durch Strahlungsheizstrecken oder -bereiche weder der Transport der Warenbahn noch die Qualität, d.h. Uniformität, der Härtung beeinträchtigt wird. Im Gegenteil, wider aller Erwartungen wird eine Vergleichmäßigung der Härtungsreaktion und mithin des Härtungsgrades erzielt. Ein weiterer Vorteil der Erfindung ist es, daß man paradoxerweise bei weniger Schwebedüsen eine höhere Leistung erzielt. Außerdem ist der Unterhalt der Anlage einfacher und wirtschaftlicher, da, während Schwebedüsen vom Imprägnierharz beschmutzt werden und periodisch gereinigt werden müssen, die Strahlungsheizkörper, die vorzugsweise eine glatte Oberfläche besitzen, keine Verschmutzung aufweisen. Obwohl bekannte Schwebetrockner nur für die Herstellung von Prepregs auf Papierbasis eingesetzt werden, eignet sich die erfindungsgemäße Anlage auch für die Herstellung von Prepregs auch auf der Basis von Vliesen und Geweben und zur Behandlung von anderen mit einer flüssigen Zubereitung versehenen Warenbahnen, z.B. von beschichteten oder bedruckten Metallbahnen und von imprägnierten oder gestrichenen Papierbahnen. Die Beschichtung der warenbahn kann auf verschiedene Weise aufgebracht worden sein, beispielsweise durch Beschichten, Rakeln oder auch auf andere Weise.

Die Warenbahn wird erfindungsgemäss in der Behandlungskammer zuerst mit warmer Luft angeblasen und danach mit Strahlungswärme beaufschlagt,dabei wird sie mit der angeblasenen Luft in der Schwebe gehalten. Es wird also im wesentlichen das aus den bekannten Schwebetrocknern bzw. Schwebeöfen bekannte Verfahren durchgeführt. Bei der Vorrichtung zur Durchführung dieses Verfahrens werden aus einem Schwebeofen eine oder mehrere Luftdüsen entfernt und an ihre Stelle Wärmestrahler angebracht.

Vorteilhafte Weiterbildungen sind Gegenstand der abhängigen Ansprüche.

Die Warenbahn wird vorzugsweise im wesentlichen horizontal durch die Behandlungskammer geführt.

Besonders vorteilhaft ist es, wenn die Warenbahn in der Behandlungskammer abwechselnd mit warmer Luft angeblasen und mit Strahlungswärme beaufschlagt wird.

Die Warenbahn kann im selben Anblasbereich abwechselnd von beiden Seiten mit warmer Luft angeblasen werden.

Wenn die Warenbahn einseitig mit Strahlungswärme beaufschlagt wird, ist die Nachrüstung eines bekannten Schwebetrockners auf besonders einfache Weise möglich. Die Warenbahn muß nämlich durch die ganze Vorrichtung hindurch eingeführt werden können. Wenn auf beiden Seiten der Warenbahn Strahlungsheizkörper vorgesehen werden, ist es deshalb vorteilhaft, zumindest einen davon wegfahrbar auszugestalten. Beim Einführen der Warenbahn wird dieser Strahlungsheizkörper weggefahren, der Abstand zwischen beiden Strahlungsheizkörpern also vergrößert, so daß die Warenbahn einwandfrei eingeführt werden kann. Während des Betriebs wird der Abstand dann wieder verkleinert. Bei der Nachrüstung eines bereits vorhandenen Strahlungstrockners ist es aufwendig bzw. schwierig, einen wegfahrbaren Strahler anzubringen. Es ist dann vorteilhaft, lediglich einen Strahlungsheizkörper vorzusehen, so daß das oben geschilderte Problem beim Einführen der Warenbahn überhaupt nicht auftritt.

Nach einer weiteren vorteilhaften Weiterbildung wird die Warenbahn gleichzeitig von oben und von unten mit Strahlungswärme beaufschlagt. Es sind also beidseitig der Warenbahn Strahlungsheizkörper vorgesehen. Vorzugsweise ist zumindest einer dieser beiden Strahlungsheizkörper wegfahrbar. Diese Ausgestaltung eignet sich insbesondere für neu hergestellte Vorrichtungen. Durch die beidseitige Bestrahlung wird die Strahlungsheizung verdoppelt, die Vorrichtung also entsprechend effektiver.

Nach einer weiteren vorteilhaften Weiterbildung wird die Warenbahn über ihre Breite mit Strahlungswärme unterschiedlicher Temperatur erwärmt, vorzugsweise mit Strahlungswärme dreier unterschiedlicher Temperaturen. Die Strahlungsheizikörper weisen also quer zur Bewegungsrichtung der Warenbahn mehrere, vorzugsweise drei, Zonen auf, deren Temperatur voneinander unabhängig regelbar ist.

Dadurch, daß die Strahlungsheizkörper über die Breite der Behandlungskammer in einzelne, individuell steuerbare Zonen unterteilt sind, d.h. daß die Warenbahn über ihre Breite von den Strahlungsheizkörpern mit unterschiedlichen Wärmemengen beaufschlagt wird, kann die Vergleichmäßigung der Härtungsreaktion und mithin des Härtungsgrades weiter erhöht werden. Die bisherigen Erfahrungen haben gezeigt, daß die Unterteilung in drei unterschiedliche Temperaturzonen bis zu einer Warenbahnbreite von 1,3 bis 2,0 m ausreicht. Ab einer Warenbahnbreite von 2,0 m kann es vorteilhaft sein, vier oder mehr Temperaturzonen vorzusehen. Je mehr Temperaturzonen vorgesehen werden, desto besser ist die Wärmezuführung über die Breite der Warenbahn steuerbar, desto aufwendiger wird allerdings auch die Anordnung.

Vorteilhaft ist es, wenn die Strahlungstemperatur höher, vorzugsweise mindestens 15° C höher, insbesondere 30°C höher, ist als die Lufttemperatur. Um diese erhöhte Temperatur aufrechterhalten zu können, ist es vorteilhaft, wenn der Strahlungsheizkörper eine Wärmespeicherfähigkeit besitzt. Dies kann mit reinen Elektroheizkörpern nicht erreicht werden, wohl aber mit Heizplatten, vorzugsweise aus Metall, die eine Wärmespeicherfähigkeit haben. Die Platten können beispielsweise auf ihrer der Warenbahn abgewandten Seite Rohre aufweisen, die von Öl, Wasser, Dampf oder einer ähnlichen Flüssigkeit durchströmt werden. Auch eine Beheizung der Platten mittels elektrischer Energie ist möglich.

Eine vorteilhafte Weiterbildung der erfindungsgemäßen Vorrichtung ist dadurch gekennzeichnet, daß die der Warenbahn zugekehrte Oberfläche des Strahlungsheizkörpers glatt ist.

Die Erfindung wird nachfolgend anhand der Fig. 1 bis 3 veranschaulicht. Es zeigen schematisch

Fig. 1 die relative Anordnung der wesentlichen Elemente in einer erfindungsgemässen Anlage in Seitenansicht;

Fig. 2 die relative Anordnung der wesentlichen Elemente in einer erfindungsgemässen Anlage in Draufsicht; und

Fig. 3 einen Schnitt durch eine erfindungsgemässe Anlage quer zur Förderrichtung der Warenbahn.

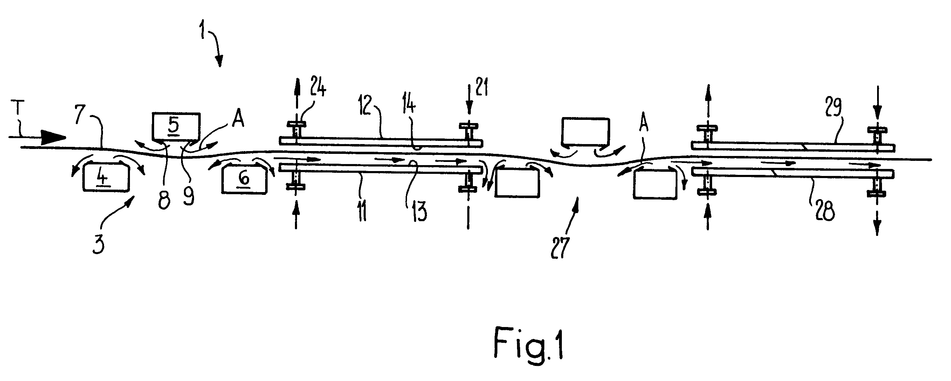

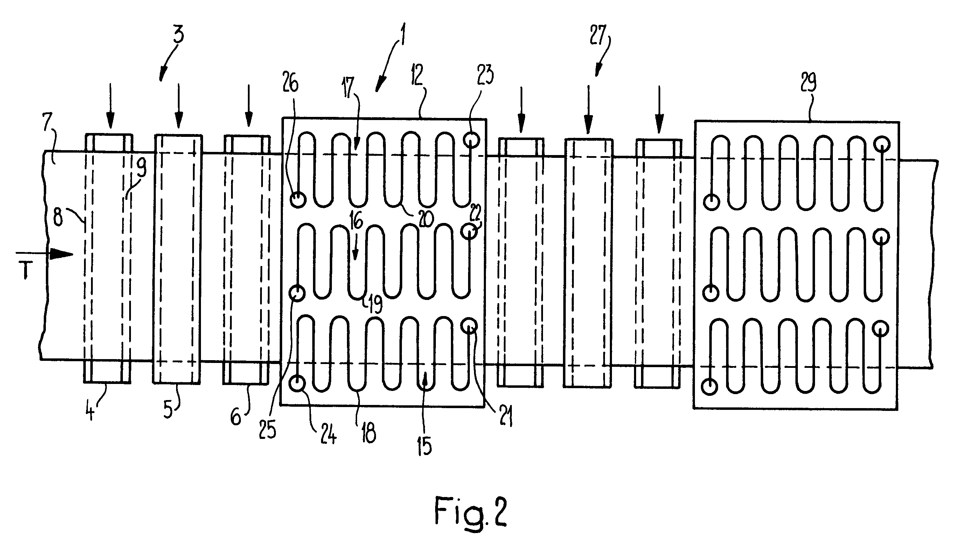

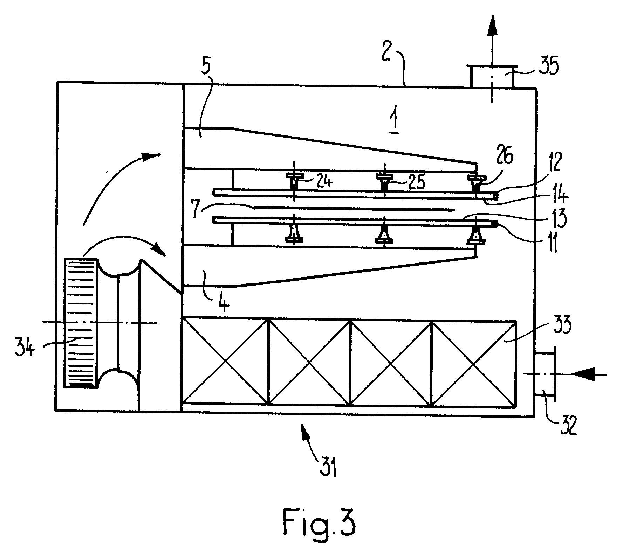

Gleiche Elemente in den Figuren werden mit denselben Bezugszeichen bezeichnet. In der Behandlungskammer oder im Schwebeofen 1, deren Wände 2 nur in Fig. 3 dargestellt sind, ist eintrittseitig (in den Fig. 1 und 2) eine erste Gruppe 3 von drei Düsenkästen 4, 5, 6 konventioneller Bauart in Querrrichtung zur Warenbahn 7 angeordnet. Der eintrittseitig erste Düsenkasten 4 ist unterhalb der Warenbahn 7, der zweite 5 in Bewegungs- oder Transportrichtung (T) der Warenbahn versetzt oberhalb der Warenbahn 7 und der dritte 6 wiederum versetzt unterhalb der Warenbahn angeordnet. Jeder Düsenkasten 5, 6, 7 weist zwei sich in Querrichtung der Warenbahn 7 erstreckende Schlitzdüsen 8, 9 auf, durch die je ein gegeneinander und gegen die Warenbahn gerichteter Blasstrahl austritt. Die beiden Blasstrahlen von warmer Luft treffen aufeinander und bilden ein die Warenbahn in der Schwebe haltendes Luftkissen. Gleichzeitig erwärmt die Luft die Warenbahn, bläst Lösungsmittel aus dem Imprägnierharz heraus und transportiert das Lösungsmittel weg. Die Abströmrichtung der Luft ist mit kleinen Pfeilen A veranschaulicht.

Die dargestellte Anlage arbeitet nach dem Luftkissenprinzip. Jedoch können erfindungsgemäss auch Anlagen eingesetzt werden, deren Düsen nach dem sogenannten Tragflächenprinzip arbeiten. Dieses Prinzip ist z.B. in der DE-PS 36 07 370 beschrieben.

Auf die erste Gruppe 3 von Düsenkästen 4, 5, 6 folgen in Transportrichtung T der Warenbahn 7 je eine beidseitig, oberhalb und unterhalb der Warenbahn 7 angeordnete Strahlungsheizkörper 11, 12 mit je einer glatten ebenen, der Warenbahn 7 zugewandten Strahlungsheizfläche 13, 14. Jeder Strahlungsheizkörper 11, 12 ist in Transportrichtung T in drei einzelne Heizzonen 15, 16, 17 unterteilt (Fig. 2). Jede dieser Zonen weist eine eigene, von den anderen unabhängige, Heizschlage 18, 19, 20 mit je einem Heizmitteleintritt 21, 22, 23 und einem Heizmittelaustritt 24, 25, 26 auf. Diese Anordnung erlaubt eine bedarfsgerechte, über die Breite unterschiedliche Erwärmung der Warenbahn und damit Optimierung der Gleichmässigkeit des Härtungsgrades über ihre Fläche. Die dargestellten Heizzonen 16, 17, 18 haben dieselbe Breite. Die Strahlungsheizkörper 11, 12 können jedoch auch in Zonen unterschiedlicher Breite, z.B. zwei breite Aussenzonen und eine schmale Mittelzone oder zwei schmale Aussenzonen und eine breite Mittelzone unterteilt sein. Die Strahlungsheizkörper können auch in nur zwei oder in mehr als drei voneinander unabhängig regelbare Zonen unterteilt sein.

Auf die beiden Strahlungsheizkörper 11, 12 folgt in Transportrichtung T eine weitere Gruppe 27 von drei Düsenkästen in analoger Anordnung wie in der ersten Gruppe 3, worauf zwei weitere, beidseitig der Warenbahn 7 angeordnete Strahlungsheizkörper 28, 29 folgen.

Die Düsenkästen 4, 5, 6 werden vorzugsweise mit einem Gemisch von Frischluft und Umluft gespeist. Eine entsprechende Einrichtung 31 ist in Fig. 3 dargestellt. Frischluft wird über einen Frischlufteinlass 32 und Filter 33 über einen Wärmeaustauscher oder einen Direktbrenner einem Umluftventilator 34 zugeführt; mit Umluft vermischt und mit dem Luftgemisch werden die Düsenkästen 4, 5, 6 gespeist. Die lösungsmittelgeladene Abluft aus dem Inneren des Schwebeofens 1 wird der durch einen Luftaustritt 35 weggeführt. Die Frischluft kann vorgewärmt werden.

Eine Behandlungskammer in einer erfindungsgemässen Anlage kann aus mehreren Einheiten der dargestellten Art von 2 bis 6 m Länge zu einem Gesamtofen von bis zu 60 m Länge und mehr zusammengesetzt werden.

Die Düsenkästen und die Heizplatten können in ihrer Entfernung zur Warenbahn verstellbar angeordnet sein.

Die Warenbahn wird, von der eingeblasenen Luft getragen, in Form einer Sinuskurve durch den Schwebeofen geführt. Die Amplitudenhöhe der Kurve ist einerseits von der Spannung der Warenbahn, die z.B. mit einem tänzergesteuerten Abzug eingestellt wird, und von der eingeblasenen Luftgeschwindigkeit/-menge abhängig. Durch Verminderung der Spannung der Warenbahn wird die Amplitudenhöhe und damit die Verweilzeit im Schwebeofen vergrössert.

Nach einer besonderen Ausführungsform sind die Strahlungsflächen der Strahlungsheizkörper entsprechend dem in der Behandlungskammer transportierten Warenbahn gebogen, was einen gleichbleibenden Abstand zwischen der Warenbahn und Strahlungsheizfläche über deren ganzen Länge und damit eine weitere Optimierung der Gleichmässigkeit der Härtung ergibt.

Die Düsenkästen können ausser, wie dargestellt, in Dreiergruppen auch in Zweier- bis Sechsergruppen angeordnet sein. Es ist auch möglich, zwischen zwei Strahlungsheizkörpern nur einen einzigen Düsenkasten anzuordnen. Der einzelne Düsenkasten kann sich bei einseitig der Warenbahn angeordneten Strahlungsheizkörpern auf derselben oder der Heizkörpern gegenüberliegenden Seite der Warenbahn angeordnet sein. Bei Anordnung der Strahlungsheizkörper und Düsenkästen oberhalb der Warenbahn, handelt es sich um nach dem Tragflächenprinzip arbeitenden Düsen. Vorteilhaft ist vor und nach einem einseitig der Warenbahn angeordneten Strahlungsheizkörper je ein Düsenkasten auf derselben Seite der Warenbahn wie der Strahlungsheizkörper angeordnet.

Das erfindungsgemässe Verfahren eignet sich für Warenbahnen aus Papier, Vlies oder Geweben und für die bekannten härtbaren Harztypen wie z.B. Phenol-, Epoxy- und Melaminharze.

Die für den jeweiligen Materialtyp erforderlichen Einzelbedingungen in der jeweiligen Anlage sind vom Trägermaterial der Warenbahn, vom Harztyp, vom Harzauftrag und vom gewünschten Härtungsgrad abhängig und werden vom Fachmann nach Vorversuchen problemlos eingestellt.

Im allgemeinen wird mit Ausblasgeschwindigkeiten von 5 bis 50 m/sec. gearbeitet. Die Lufttemperatur liegt vorteilhaft 20° bis 25°C unterhalb der Temperatur der Strahlungsheizkörper.

Nachfolgend werden als Beispiel die Betriebsbedingungen bei der erfindungsgemässen Herstellung eines Prepregs angegeben.

| Warenbahn: | Papier 180 g/m2 (roh) |
| Harz: | Phenolharz |
| Harzauftragsgewicht: | 60 % trocken |
| Warenbahngeschwindigkeit: | 40 m/min. |
| Lufttemperatur: | 180°C |
| Luftgeschwindigkeit: | 20 m/sec. |
| Temperatur Strahlungsheizkörper: | 200°C |

**Patentansprüche**

1. Verfahren zur Wärmebehandlung einer mit einer flüssigen oder pastenförmigen Zubereitung versehenen Warenbahn in mindestens einer Behandlungskammer mittels Strahlungswärme und Warmluft, dadurch gekennzeichnet, dass die Warenbahn in der Behandlungskammer zuerst in einem ersten Bereich mit vorgewärmter Luft angeblasen und in einem nachfolgenden zweiten Bereich mit Strahlungswärme beaufschlagt wird, wobei die Warenbahn in der Behandlungskammer durch das Anblasen mit warmer Luft in der Schwebe gehalten wird.

2. Verfahren nach Anspruch 1, dadurch gekennzeichnet, dass die Warenbahn im wesentlichen horizontal durch die Behandlungskammer geführt wird.

3. Verfahren nach einem der vorangehenden Ansprüche, dadurch gekennzeichnet, dass die Warenbahn in der Behandlungskammer abwechselnd mit warmer Luft angeblasen und mit Strahlungswärme beaufschlagt wird.

4. Verfahren nach einem der vorangehenden Ansprüche, dadurch gekennzeichnet, dass die Warenbahn im selben Anblasbereich abwechselnd von beiden Seiten mit warmer Luft angeblasen wird.

5. Verfahren nach einem der vorangehenden Ansprüche, dadurch gekennzeichnet, dass die Warenbahn einseitig mit Strahlungswärme beaufschlagt wird.

6. Verfahren nach einem der Ansprüche 1-4, dadurch gekennzeichnet, dass die Warenbahn gleichzeitig von oben und von unten mit Strahlungswärme beaufschlagt wird.

7. Verfahren nach einem der vorangehenden Ansprüche, dadurch gekennzeichnet, dass die Warenbahn über ihre Breite mit Strahlungswärme unterschiedlicher Temperatur erwärmt wird.

8. Verfahren nach einem der vorangehenden Ansprüche, dadurch gekennzeichnet, dass die Warenbahn über ihre Breite mit Strahlungswärme dreier unterschiedlicher Temperaturen erwärmt wird.

9. Verfahren nach einem der vorangehenden Ansprüche, dadurch gekennzeichnet, dass die Strahlungstemperatur höher, vorzugsweise mindestens 15°C höher als die Lufttemperatur ist.

10. Verfahren nach einem der vorangehenden Ansprüche, dadurch gekennzeichnet, dass die Warenbahn mit einem härtbaren Harz, insbesondere einem härtbaren Kunstharz, imprägniert ist.

11. Vorrichtung zur Durchführung des Verfahrens nach einem der vorangehenden Ansprüche mit einer Behandlungskammer (1), durch die eine Warenbahn (7) geführt wird und in der mindestens ein Strahlungsheizkörper (11,12,28,29) und mindestens ein Lufteintritt für Warmluft angeordnet sind, dadurch gekennzeichnet, dass in der Behandlungskammer (1) in Bewegungsrichtung (T) der Warenbahn (7) zuerst mindestens eine Luftdüse (8,9) oder eine Luftdüsenanordnung und anschliessend mindestens ein Strahlungsheizkörper (11,12,28,29) angeordnet ist und dass die Behandlungskammer (1) als Schwebetrockner ausgebildet ist.

**12.** Vorrichtung nach Anspruch 11, dadurch gekennzeichnet, dass die Behandlungskammer (1) horizontal angeordnet ist.

**13.** Vorrichtung nach einem der Ansprüche 11 bis 12, dadurch gekennzeichnet, dass in der Behandlungskammer (1) in Bewegungsrichtung (T) der Warenbahn (7) abwechselnd eine Luftdüse oder eine Luftdüsenanordnung (3,27) und mindestens ein Strahlungsheizkörper (11,12,28,29) angeordnet sind.

**14.** Vorrichtung nach einem der Ansprüche 11 bis 13, dadurch gekennzeichnet, dass die Luftdüsen bzw. Luftdüsenanordnungen (3,27) quer zur Bewegungsrichtung (T) der Warenbahn (7) verlaufen.

**15.** Vorrichtung nach einem der Ansprüche 11 oder 14, dadurch gekennzeichnet, dass die Luftdüsen (4,5,6) in einer Luftdüsenanordnung (3,27) abwechselnd oberhalb und unterhalb der Warenbahn angeordnet sind, so dass die Warenbahn in der jeweiligen Luftdüsenanordnung (3,27) abwechselnd von oben und von unten mit warmer Luft angeblasen wird, wobei die eine oder mehreren unteren Luftdüsen (4,6) gegenüber der oder den oberen Luftdüsen (5) versetzt sind.

**16.** Vorrichtung nach einem der Ansprüche 11 bis 15, dadurch gekennzeichnet, dass in demselben Bereich ein Strahlungsheizkörper nur auf einer Seite der Warenbahn (7) angeordnet ist, so dass die Warenbahn nur einseitig mit Strahlungswärme beaufschlagt wird.

**17.** Vorrichtung nach einem der Ansprüche 11 bis 15, dadurch gekennzeichnet, dass in demselben Bereich je ein Strahlungsheizkörper (11,12,28,29) auf jeder Seite der Warenbahn (7) angeordnet ist, so dass die Warenbahn beidseitig mit Strahlungswärme beaufschlagt wird.

**18.** Vorrichtung nach einem der Ansprüche 11 bis 17, dadurch gekennzeichnet, dass die Strahlungsheizkörper (11,12,28,29) quer zur Bewegungsrichtung (T) der Warenbahn (7) mehrere, vorzugsweise drei, Zonen (15,16,17) aufweisen, deren Temperatur voneinander unabhängig regelbar ist.

**19.** Vorrichtung nach einem der Ansprüche 11 bis 18, dadurch gekennzeichnet, dass die der Warenbahn zugekehrte Oberfläche des Strahlungsheizkörpers glatt ist.

**20.** Vorrichtung nach einem der Ansprüche 11 bis 19, dadurch gekennzeichnet, dass die Strahlungstemperatur des Strahlungsheizkörpers höher, vorzugsweise um mindestens 15°C höher als die Lufttemperatur ist.

## Claims

**1.** A method for the heat treatment of a product web provided with a liquid or pasty preparation in at least one processing chamber by means of radiant heat and hot air, characterized in that the product web in the processing chamber is in a first zone first subjected to blasts of preheated air and is in a following second zone subjected to radiant heat, in which process the product web is kept floating by being blasted with hot air.

**2.** A method according to claim 1, characterized in that the product web is carried substantially horizontally through the processing chamber.

**3.** A method according to one of the preceding claims, characterized in that the product web is subjected in the processing chamber alternately to blasts of hot air and radiant heat.

**4.** A method according to one of the preceding claims, characterized in that the product web is, in the same blasting zone, subjected to blasting with hot air alternately from both sides.

**5.** A method according to one of the preceding claims, characterized in that the product web is subjected to radiant heat on one side.

**6.** A method according to one of claims 1 - 4, characterized in that the product web is simultaneously subjected to radiant heat from above and below.

7. A method according to one of the preceding claims, characterized in that the product web is heated over its width with radiant heat at different temperatures.

8. A method according to one of the preceding claims, characterized in that the product web is heated over its width with radiant heat at three different temperatures.

9. A method according to one of the preceding claims, characterized in that the temperature of the radiant heat is higher, preferably at least 15° higher, than the air temperature.

10. A method according to one of the preceding claims, characterized in that the product web is impregnated with a hardenable resin, in particular a thermosetting synthetic resin.

11. An apparatus for operating the method according to one of the preceding claims, with a processing chamber (1) through which a product web (7) is carried and wherein there are arranged at least one radiant heater (11, 12, 28, 29) and at least one air intake for hot air, characterized in that in the processing chamber (1), there is arranged at first in the direction of movement (T) of the product web (7) at least one air nozzle (8, 9) or an array of air nozzles and following on, at least one radiant heater (11, 12, 28, 29), and that the processing chamber (1) is designed as a float dryer.

12. An apparatus according to claim 11, characterized in that the processing chamber (1) is arranged horizontally.

13. An apparatus according to one of claims 11 to 12, characterized in that in the processing chamber (1), there is arranged alternately in the direction of movement (T) of the product web (7) an air nozzle or an array (3, 27) of air nozzles and at least one radiant heater (11, 12, 28, 29).

14. An apparatus according to one of claims 11 to 13, characterized in that the air nozzles or the arrays (3, 27) of air nozzles extend transversely to the direction of movement (T) of the product web (7).

15. An apparatus according to one of claims 11 or 14, characterized in that the air nozzles (4, 5, 6) are arranged in an array (3, 27) of air nozzles alternately above and below the product web, so that the product web is subjected in the respective array (3, 27) of air nozzles to a blast of hot air alternately from above and from below, in which arrangement, the one or more lower air nozzles (4, 6) are offset relative to the one or more upper air nozzles (5).

16. An apparatus according to one of claims 11 to 15, characterized in that in the same zone, a radiant heater is arranged only on one side of the product web (7), so that the product web is subjected to radiant heat only on one side.

17. An apparatus according to one of claims 11 to 15, characterized in that in the same zone, there is arranged one radiant heater (11, 12, 28, 29) each on each side of the product web (7), so that the product web is subjected to radiant heat on both sides.

18. An apparatus according to one of claims 11 to 17, characterized in that the radiant heaters (11, 12, 28, 29) have, transversely to the direction of movement (T) of the product web (7), several, preferably three, zones (15, 16, 17), whose temperature can be adjusted independently of one another.

19. An apparatus according to one of claims 11 to 18, characterized in that the surface of the radiant heater facing the product web is smooth.

20. An apparatus according to one of claims 11 to 19, characterized in that the temperature of the radiant heat of the radiant heater is higher, preferably at least 15° higher, than the air temperature.

**Revendications**

1. Procédé de traitement thermique d'un produit en bande, muni d'un apprêt liquide ou pâteux, dans une chambre de traitement, au moins, au moyen de chaleur rayonnante et d'air chaud, caractérisé en ce que le produit en bande, dans la chambre de traitement, est d'abord balayé par de l'air préchauffé dans une première zone, puis alimenté en chaleur rayonnante dans une seconde zone aval, le produit en bande étant maintenu en suspension dans la chambre de traitement par le balayage d'air chaud.

2. Procédé suivant la revendication 1, caractérisé en ce que le produit en bande est guidé au travers de la chambre de traitement dans un sens essentiellement horizontal.

3. Procédé suivant l'une quelconque des revendications précédentes, caractérisé en ce que le produit en bande est alternativement balayé à l'air chaud et alimenté en chaleur rayonnante dans la chambre de traitement.

4. Procédé suivant l'une quelconque des revendications précédentes, caractérisé en ce que le produit en bande est alternativement balayé à l'air chaud, des deux côtés, dans la même zone de soufflage.

5. Procédé suivant l'une quelconque des revendications précédentes, caractérisé en ce que le produit en bande est alimenté d'un côté en chaleur rayonnante.

6. Procédé suivant l'une quelconque des revendications 1 à 4, caractérisé en ce que le produit en bande est alimenté simultanément en chaleur rayonnante à partir du haut et du bas.

7. Procédé suivant l'une quelconque des revendications précédentes, caractérisé en ce que le produit en bande est chauffé sur sa largeur par de la chaleur rayonnante d'une température différente.

8. Procédé suivant l'une quelconque des revendications précédentes, caractérisé en ce que le produit en bande est chauffé sur sa largeur par de la chaleur rayonnante de trois températures différentes.

9. Procédé suivant l'une quelconque des revendications précédentes, caractérisé en ce que la température de radiation est supérieure, de 15°C au moins de préférence, à la température d'air.

10. Procédé suivant l'une quelconque des revendications précédentes, caractérisé en ce que le produit en bande est imprégné d'une résine durcissable, d'une résine synthétique durcissable notamment.

11. Dispositif pour la réalisation du procédé suivant l'une quelconque des revendications précédentes, avec une chambre de traitement (1), au travers de laquelle est guidé un produit en bande (7), et dans laquelle sont disposés un corps de chauffe par rayonnement (11, 12, 28, 29), au moins, et une admission d'air chaud, au moins, caractérisé en ce que, dans la chambre de traitement (1) et dans le sens de déplacement (T) du produit en bande (7), un injecteur d'air (8, 9), ou un agencement d'injecteurs d'air, au moins, est d'abord disposé, puis un corps de chauffe par rayonnement (11, 12, 28, 29), au moins, et en ce que la chambre de traitement (1) est réalisée sous forme de séchoir à colonne d'air chaud.

12. Dispositif suivant la revendication 11, caractérisé en ce que la chambre de traitement (1) est disposée à l'horizontale.

13. Dispositif suivant l'une des revendications 11 et 12, caractérisé en ce qu'un injecteur d'air, ou un agencement d'injecteurs d'air (3, 27), et un corps de chauffe par rayonnement (11, 12, 28, 29), au moins, sont disposés dans la chambre de traitement (1), dans le sens de déplacement (T) du produit en bande (7).

14. Dispositif suivant l'une quelconque des revendications 11 à 13, caractérisé en ce que les injecteurs d'air et/ou les agencements d'injecteurs d'air (3, 27) se situent à la transversale du sens de déplacement (T) du produit en bande (7).

15. Dispositif suivant l'une des revendications 11 et 14, caractérisé en ce que les injecteurs d'air (4, 5, 6) sont disposés dans un agencement d'injecteurs (3, 27) alternativement au-dessus et au-dessous du produit en bande, de sorte que le produit en bande, dans l'agencement d'injecteurs (3, 27) respectif, est balayé alternativement à l'air chaud à partir du haut et du bas, l'injecteur, ou plusieurs injecteurs d'air inférieurs (4, 6), étant en déport par rapport à l'injecteur ou aux injecteurs d'air supérieurs (5).

16. Dispositif suivant l'une quelconque des revendications 11 à 15, caractérisé en ce qu'un corps de chauffe par rayonnement n'est disposé que d'un côté du produit en bande (7), dans la même zone, de sorte que le produit en bande n'est alimenté en chaleur rayonnante qu'unilatéralement.

17. Dispositif suivant l'une quelconque des revendications 11 à 15, caractérisé en ce qu'un corps de chauffe par rayonnement (11, 12, 28, 29) est disposé de chaque côté du produit en bande (7), dans la même zone, de sorte que le produit en bande est alimenté bilatéralement en chaleur rayonnante.

18. Dispositif suivant l'une quelconque des revendications 11 à 17, caractérisé en ce que les corps de chauffe par rayonnement (11, 12, 28, 29) présentent, à la transversale du sens de déplacement (T) du produit en bande (7), plusieurs zones, trois de préférence (15, 16, 17), d'une température réglable indépendamment les unes des autres.

19. Dispositif suivant l'une quelconque des revendications 11 à 18, caractérisé en ce que la surface du corps de chauffe par rayonnement, tournée vers le produit en bande, est lisse.

20. Dispositif suivant l'une quelconque des revendications 11 à 19, caractérisé en ce que la température de radiation du corps de chauffe par rayonnement est supérieure, de 15°C au moins de préférence, à la température d'air.

Fig.1

EP 0 452 867 B1

Fig.2

Fig.3